# EUROPÄISCHE PATENTSCHRIFT

(11) **EP 1 690 779 B1**
(45) Veröffentlichungstag und Bekanntmachung des Hinweises auf die Patenterteilung: **09.01.2008**
(21) Anmeldenummer: 05405184.2
(22) Anmeldetag: 11.02.2005
(51) Int. Cl.: B62D 21/11

(54) **Hilfsrahmen für Kraftfahrzeuge**
Subframe for motor vehicles
Châssis auxiliaire pour véhicules automobiles

(43) Veröffentlichungstag der Anmeldung: 16.08.2006
(73) Patentinhaber: AUDI AG, 85045 Ingolstadt (DE)
(72) Erfinder: Bergmann, Günter, 78224 Singen (DE); Höss, Ralf, 78359 Orsingen-Nenzingen (DE); Darra, Dennis, 8213 Neunkirch (CH)

(56) Entgegenhaltungen:
- EP-A- 0 678 441
- EP-A- 1 321 351
- DE-A1- 19 703 951
- US-A- 5 772 245

## Beschreibung

Vorliegende Erfindung betrifft einen Hilfsrahmen eines Vorderwagens eines Kraftfahrzeuges mit einer ersten und zweiten Rahmenseite, die in Fahrzeugquerrichtung voneinander beabstandet und über wenigstens einen im wesentlichen in Fahrzeugquerrichtung verlaufenden Querträger miteinander verbunden sind, wobei die beiden Rahmenseiten jeweils zwei in Fahrzeuglängsrichtung hintereinander angeordnete und direkt oder indirekt miteinander verbundene Seitenteile enthalten.

Hilfsrahmen für Kraftfahrzeuge, auch Fahrschemel oder Achsträger genannt, finden insbesondere in Personenkraftwagen, aber auch in mit Personenkraftwagen im Aufbau ähnlichen Fahrzeugen bis hin zu Geländewagen und leichten Lieferfahrzeugen Verwendung. Sie sind als mit der Karosserie des Fahrzeuges über Lager fest verbundene, steife Rahmen ausgebildet und werden sowohl im Vorder- als auch im Hinterwagen von Kraftfahrzeugen eingesetzt.

Die Hilfsrahmen dienen neben der Aussteifung der Vorder- oder Hinterwagenstruktur auch zur Anbindung und Abstützung von Radführungslenkern. Fallweise nehmen Hilfsrahmen auch das Lenkgetriebe oder Stabilisatoren auf. Hilfsrahmen im Vorderwagenbereich enthalten überdies Lagerpunkte für das Antriebsaggregat, wohingegen Hilfsrahmen im Hinterwagenbereich ein Differentialgetriebe aufnehmen können. Aufgrund der vielfältigen Funktionen, welche solche Hilfsrahmen mitunter innehaben, müssen diese unter Berücksichtigung der im Fahrbetrieb einwirkenden Kräfte recht stabil ausgebildet sein.

Die Hilfsrahmen enthalten üblicherweise in Fahrzeuglängsrichtung ausgerichteten Seitenteile, wie Längsträger, welche über Querträger miteinander zu einem Rahmen verbunden sind. Die Seitenteile enthalten in der Regel Anbindungspunkte zur Festlegung, d.h. Anbindung bzw. Befestigung, des Hilfsrahmens an die Karosseriestruktur.

Die Hilfsrahmen müssen, insbesondere in der Verwendung als Vorderachsträger, zunehmend auch auf die Sicherheit der Fahrzeuginsassen bezogene Funktionen für ein Crash-Ereignis, wie z.B. ein Aufprall auf ein stehendes Hindernis oder ein Zusammenstoss mit einem Fahrzeug, übernehmen. D.h. es werden zunehmend höhere Anforderungen an den Hilfsrahmen und an die Vorbaugestaltung des Fahrzeuges bezüglich des Deformationsverhaltens der Rahmenstruktur in einem Aufprallereignis gestellt.

Der Hilfsrahmen soll in einem Aufprallereignis durch gezielte Deformation der Rahmenstruktur ebenfalls Aufprallenergie absorbieren. Dabei sollen im Crash-Ereignis die deformationsauslösenden Längskräfte am Hilfsrahmen unter dem Kraftniveau der Fahrzeuglängsträger liegen, um Letztere nicht in der Deformation zu behindern.

Bei einem Frontalaufprall bilden die in Fahrzeuglängsrichtung ausgerichteten Längsträger der Vorderbaustruktur sogenannte Lastpfade aus, über welche die im Stossfängerbereich bzw. im vorderen Crashbereich eingeleitete Aufprallenergie in die hintere, der Fahrgastzelle nahe liegende Fahrzeugstruktur eingeleitet wird.

Zur Vermeidung oder Verminderung einer solchen Krafteinleitung in die Fahrgastzelle selbst, wird im Rahmen der Vorbaugestaltung häufig eine gezielte Deformierbarkeit der dem Rahmen oder dem Aufbau zugehörigen Längsträger vorgesehen, wobei die entsprechenden Deformationszonen wenigstens Teilbereiche der rahmen- oder aufbauseitigen Längsträger sind. In diesen Deformationszonen wird Aufprallenergie durch kontrollierte Stauchung, insbesondere Faltung, des Trägerbereichs absorbiert.

Die Ausbildung solcher Deformationszonen trägt im Falle eines Aufprallereignisses, insbesondere eines Frontalaufpralls, zur Erhöhung der Sicherheit der Fahrgäste bei, indem die Längsträger mittels Stauchung der Trägerstruktur unter Schonung der Fahrgastzelle Aufprallenergie absorbieren.

Die in Fahrzeuglängsrichtung ausgerichteten Seitenteile des Hilfsrahmens bilden ebenfalls Lastpfade aus, durch welche Aufprallenergie in hintere Bereiche der Fahrzeugstruktur weitergeleitet wird. Zur Steigerung der Energieabsorption im Vorderbaubereich und somit zur Steigerung der Sicherheit der Fahrgäste, werden häufig auch die Seitenteile der Hilfsrahmen mit Deformationszonen ausgebildet, wobei wenigstens in Teilabschnitten der Seitenteile durch kontrollierte Stauchung, insbesondere Faltung, der Seitenteile Aufprallenergie absorbiert wird.

Die Ausbildung einer weiteren Deformationsebene im Bereich des Hilfsrahmens weist den Vorteil auf, dass die einerseits über die Längsträger und andererseits über die darunterliegenden Seitenteile eingeleitete Energie auf verschiedenen Ebenen abgebaut wird und somit zu einer Erhöhung der Sicherheit beiträgt. Gleichzeitig wird die Absorption von Aufprallenegie durch den Fahrzeugvorderbau erheblich gesteigert.

Die hohen Anforderungen an die Steifigkeit sowie an das Energieabsorptionsvermögen des Hilfsrahmens wirken einschränkenden auf die Gestaltungsfreiheit für Hilfsrahmenkonstruktionen. Eine weitere Einschränkung des Gestaltungsfreiraumes ergibt sich zudem durch den durch die Fahrzeugkarosserie, das Antriebsaggregat, Radführungselemente und weiteren Aggregaten eingeschränkten Bauraum.

Weitere Anforderungen an einen Hilfsrahmen sind ferner neben niedrigen Fertigungskosten die Gewichts- und Bauteilreduktion sowie ein montage- und reparaturfreundliches Design.

Die EP 0 530 594 B1 beschreibt einen Hilfsrahmen mit zwei Seitenteilen aus Leichtmetallguss, welche Lagerpunkte zur Befestigung mit dem Fahrzeugaufbau sowie Anbindungsstellen für Radführungselemente enthalten. Der besagte Hilfsrahmen weist jedoch keine geeignete Struktur zur Aufnahme von in Fahrzeuglängsrichtung einwirkender Aufprallenergie auf.

Die EP 0 941 912 B1 wiederum beschreibt einen Hilfsrahmen mit seitlichen Längsträgern, wobei die Anbindungsstellen für das Fahrzeugfahrwerk sowie sämtliche Anbindungspunkte zur Karosseriestruktur an den Längsträgern angeordnet sind. Ferner sind auch die Lagerpunkte für das Antriebsaggregates an den Längsträgern angebracht. Die Vielzahl von Lager- und Anbindungspunkten über die Längserstreckung des Längsträgers beeinträchtigen dessen Funktion als Energie absorbierendes Element der Hilfsrahmenkonstruktion.

Die DE19703951 A1 beschreibt ein Hilfsrahmen mit einer vorderer und einer hinterer Querträger, verbunden mit einem linkerem und einem rechterem Seitenteil, wobei jedes Seitenteil im ihrem hinterem Abschnitt eine die Festigkeit verminderende Einrichtung hat.

Aufgabe vorliegender Erfindung ist es daher, einen Hilfsrahmen vorzuschlagen, welcher sowohl hinsichtlich des Deformationsverhaltens unter Sicherheitsgesichtspunkten wie auch hinsichtlich der notwendigen Betriebsfestigkeit und Steifigkeit befriedigen soll, und durch welchen zudem günstige Montagevoraussetzungen geschaffen werden.

Erfindungsgemäss wird die Aufgabe dadurch gelöst, ein erstes zum Fahrzeugstossfänger hin angeordnetes Seitenteil ein Metallgussteil ist und ein zur Fahrgastzelle hin angeordnetes, zweites Seitenteil ein Hohlprofil ist, wobei die ersten Seitenteile der Rahmenseiten bezogen auf ein Crash-Ereignis als Starrkörper und die zweiten Seitenteile als in Fahrzeuglängsrichtung energieabsorbierende Deformationselemente ausgebildet sind.

Der erfindungsgemässe Hilfsrahmen kann sowohl als Vorderachs- wie auch als Hinterachsträger ausgebildet sein. Im ersten Fall ist das erste Seitenteil zur Fahrzeugfront und das zweite Seitenteil zur Fahrgastzelle hin angeordnet. Im zweiten Fall ist das erste Seitenteil zum Fahrzeugheck und das zweite Seitenteil zur Fahrgastzelle hin angeordnet.

Die in Fahrzeugquerrichtung einander gegenüberliegenden ersten und/oder zweiten Seitenteile der ersten und zweiten Rahmenseite sind bevorzugt jeweils spiegelsymmetrisch ausgebildet.

Das erste Seitenteil ist bevorzugt unter Ausbildung eines Überlappungsbereichs mit dem zweiten Seitenteil verbunden. Dies kann bsp. (beispielsweise) in Form einer Steckverbindung sein. Die beiden Seitenteile sind bevorzugt entlang der durch eine Stossfläche ausgebildeten Fügelinie miteinander verschweisst. Die Verbindung kann auch mittels Schrauben oder Kleben oder einer Kombination verschiedener Fügetechniken erfolgen. Die Steckverbindung ist dergestalt, dass die Krafteinleitung in einem Aufprallereignis an der Fügestelle in Achsenrichtung des angebundenen zweiten Seitenteils erfolgt.

Das zweite Seitenteil ist bevorzugt auf einen Steckkörper am ersten Seitenteil aufgesteckt, wobei die Profilwände des zweiten Seitenteils den Steckkörper umgreifen. Das zweite Seitenteil kann jedoch auch selbst den Steckkörper ausbilden und mit diesem in das erste Seitenteil eingesteckt, wobei Seitenwände des ersten Seitenteils den Steckkörper umgreifen. Die Steckverbindung bildet vorzugsweise einen Formschluss aus.

Das erste Seitenteil ist bevorzugt ein Leichtmetallgussteil, insbesondere ein Gussteil aus Aluminium, Magnesium oder einer Legierung, wie AlSi7Mg0.3, davon. Das erste Seitenteil ist bevorzugt mittels Kokillenguss hergestellt.

Das erste Seitenteil enthält einen, zwei oder mehrere vordere Befestigungspunkte zur Anbindung des Hilfsrahmens an eine Karosseriestruktur, insbesondere an einen Karosserielängsträger. Die Befestigungspunkte sind bevorzugt in Fahrzeuglängsrichtung hintereinander und voneinander beabstandet angeordnet sowie in Fahrzeughochrichtung, d.h. senkrecht zu der durch die Fahrzeuglängs- und querrichtung definierten Ebene, ausgelegt. Die Befestigungspunkte können als konsolenartige, jeweils eine Ausnehmung zur Aufnahme einer Schraubverbindung aufweisende Anformung ausgebildet sein.

Ferner enthält das erste Seitenteil Anbindungspunkte zur Festlegung von Fahrwerkslenkern sowie Anbindungspunkte zur Festlegung eines Antriebsaggregates. Das Antriebsaggregat kann umfassen, einen Motor (insbesondere bei Vorderachsträgern), ein Getriebe und/oder ein Differential (insbesondere bei Hinterachsträgern). Das erste Seitenteil kann ferner auf verschiedenen ebenen angeordnete Anbindungspunkte zur Festlegung von bsp. oberen und unteren Radlenkerarme enthalten.

Das erste Seitenteil enthält ferner bevorzugt einen ersten Schenkel zur Anbindung des Querträgers sowie einen zweiten Schenkel zur Anbindung einer zusätzlichen Verstärkungsstruktur. Die beiden Schenkel bilden einen Schenkelzwischenraum aus und sind zur gegenüberliegenden Rahmenseite hin ausgerichtet.

Einer der beiden Schenkel, vorzugsweise der zweite Schenkel, enthält ferner zwei zur Fahrzeugaussenseite gerichtete, parallel und in Abstand zueinander verlaufende Schenkel-Wände, welche zusammen mit einer Verbindungswand einen U-förmigen, zur Fahrzeugaussenseite hin offenen Schenkelquerschnitt ausbilden. Die Schenkel-Wände enthalten sich gegenüber liegende Ausnehmungen zur Aufnahme einer Schraubverbindung, über welche ein Fahrwerkslenker an den Hilfsrahmen angebunden wird.

Der Querträger, auch Querstrebe oder Schubstrebe genannt, verbindet die gegenüberliegenden ersten Seitenteile der beiden Rahmenseiten miteinander. Zusammen mit der ebenfalls an den Seitenteilen festgelegten, ergänzenden Versteifungsstruktur trägt dieser massgeblich zur Aussteifung der Rahmenstruktur bei.

Der Querträger ist bevorzugt ein Ein- oder Mehrkammerhohlprofil, insbesondere ein Strangpresshohlprofil. Der Querträger kann ferner auch ein längsnahtgeschweisstes Rohr sein. Dieses ist bevorzugt beidends mit den ersten Seitenteilen verschweisst. Der Querträger kann jedoch auch mittels lösbarer Verbindung, insbesondere mittels Schraubverbindung mit den Seitenteilen verbunden sein. Die ersten Seitenteile sind bevorzugt über die jeweils zur gegenüberliegenden Rahmenseite gerichteten, ersten Schenkeln mit dem Querträger verbunden.

Der Querträger ist bevorzugt ein Flachprofil, welches hochkant, d.h. mit seiner Querschnittslängsseite in Fahrzeughochrichtung, verbaut ist. Der Querträger ist vorzugsweise, analog zur Verbindung zwischen dem ersten und zweiten Seitenteil, unter Ausbildung eines Überlappungsbereichs über eine Steckverbindung mit den ersten Schenkeln verbunden, wobei die ersten Schenkel oder der Querträger den Steckkörper ausbilden können.

Der Querträger ist bevorzugt aus Metall, insbesondere aus einem Leichtmetall, wie Aluminium oder einer Legierung davon. Der Querträger kann auch aus Stahl oder einem Kunststoff, insbesondere faserverstärkten Kunststoff sein.

Das zweite Seitenteil ist bevorzugt ein mittels Strangpressen hergestelltes Ein- oder Mehrkammerhohlprofil. Das Strangpressprofil kann zwecks weitergehender Querschnittsgestaltung und/oder zwecks Kalibrierung mittels eines IHU- (Innenhochdruckumform-) Verfahrens umgeformt sein. Die Formgebung des zweiten Seitenteils kann ferner auch ein Biege- und oder Prägeverfahren umfassen.

Das zweite Seitenteil kann auch aus einem längsnahtgeschweissten Rohr bestehen welches, zwecks weitergehender Querschnittsgestaltung und/oder Kalibrierung, mittels eines IHU-, Biege- und/oder Prägeverfahrens umgeformt sein kann.

Der Längsverlauf des zweiten Seitenteils ist entsprechend dem vorhandenen Bauraum angepasst und kann Biegungen enthalten. So kann das zweite Seitenteil eine zur gegenüberliegenden Rahmenseite gerichtete Krümmung aufweisen.

Das zweite Seitenteil ist bevorzugt aus einem Metall bzw. einem Leichtmetall, insbesondere aus Aluminium oder einer Aluminiumlegierung. Das zweite Seitenteil kann jedoch auch aus einem Eisenmetall, wie Stahl, oder aus einem Kunststoff, insbesondere aus einem faserverstärkten Kunststoff sein. Das zweite Seitenteil aus Metall soll sich insbesondere durch seine duktilen Eigenschaften im Crash-Ereignis auszeichnen.

Das zweite Seitenteil enthält einen, zwei oder mehrere hintere Befestigungspunkte zur Anbindung des Hilfsrahmens an eine Karosseriestruktur, insbesondere an einen Karosserielängsträger. Der oder die Befestigungspunkte sind bevorzugt in dem der Fahrgastzelle zugewandten Endabschnitt des zweiten Seitenteils angeordnet.

Die Anbindung kann beispielsweise über durch den Profilquerschnitt geführte Schraubverbindungen, insbesondere in Fahrzeughochrichtung geführten Schraubverbindungen geschehen. Der Profilquerschnitt ist im Bereich der Befestigungspunkte bevorzugt abgeflacht. Zur Erhöhung der Steifigkeit und Vermeidung einer Profildeformation sind im Verbindungsbereich bevorzugt sogenannte Distanzstücke in den Profilquerschnitt eingeschoben. Die Distanzstücke sind bevorzugt aus Metall, insbesondere aus Aluminium oder einer Legierung davon.

Das zweite Seitenteil kann ferner Anbindungspunkte für Radführungsglieder, insbesondere Führungslenker, enthalten. Die Anbindungspunkte können bsp. durch Anbindungselemente ausgebildet sein, welche an das zweite Seitenteil bsp. über eine Schweissverbindung angebracht sind.

Die bereits genannte zusätzliche Versteifungsstruktur kann verschiedenartig ausgebildet sein. Gemäss einer ersten Ausführungsform umfasst die Versteifungsstruktur ein Schubfeld in Form eines flächenförmigen Versteifungselements, welches die ersten Seitenteile der beiden Rahmenseiten miteinander verbindet. Die ersten Seitenteile sind hierzu bevorzugt über jeweils zur gegenüber liegenden Rahmenseite gerichteten, zweiten Schenkeln mit dem Schubfeld verbunden.

Das Schubfeld ist bevorzugt ein Strangpressprofil mit wenigstens einer, das Profil versteifenden, zentralen und flachen Hohlkammer sowie beidseits davon angeordneten Verbindungsflanschen, über welche das Versteifungselement mit den ersten Seitenteilen verbunden ist. Das Schubfeld kann ferner Versteifungsrippen enthalten.

Das Schubfeld kann auch aus einem Walzprodukt, wie einem Blech oder einer Platte, gefertigt sein. Das Walzprodukt zur weiteren Versteifung profiliert sein und bsp. längslaufende Sicken aufweisen.

Das Schubfeld besteht bevorzugt aus einem Metall, insbesondere einem Leichtmetall, wie Aluminium oder einer Aluminiumlegierung, bsp. AlMg3.

Die flächenförmige Ausgestaltung des Schubfeldes ist durch den begrenzten Bauraum im dem Querträger in Richtung Fahrgastzelle nachfolgenden Bereich bedingt. Da im mittleren Abschnitt des Schubfeldes geringfügig mehr Bauraum zur Verfügung steht, erlaubt dies die Ausbildung von einer oder mehreren zentralen, flächigen Hohlkammern zwecks Erhöhung der Steifigkeit.

Das Schubfeld kann zusätzlich mit dem Querträger und/oder den ersten Schenkeln lösbar, insbesondere über Schraubverbindungen, verbunden sein. Ferner kann das Schubfeld auch mit den zweiten Seitenteilen lösbar verbunden sein. Die Anbindung des Schubfeldes an den Querträger kann bsp. über einen Flansch am Querträger oder direkt am Querträger erfolgen.

Das Schubfeld ist mit den Seitenteilen und gegebenenfalls mit dem Querträger und den zweiten Seitenteilen lösbar, insbesondere mittels Schraubverbindungen, verbunden. Dies, um im Reparaturfall eine einfache Zugangsmöglichkeit und Austauschmöglichkeit zu schaffen.

Das Schubfeld ist ferner mit den zweiten Schenkeln vorzugsweise über eine Doppelverschraubung verbunden. Diese kann aus zwei in Fahrzeugquerrichtung hintereinander und voneinander beabstandet angeordneten Schraubverbindungen bestehen.

In einer alternativen Ausbildung der zusätzlichen Versteifungsstruktur ist das Schubfeld vom Querträger beabstandet angeordnet und über Kreuz- oder V-Streben mit diesem oder den beiden ersten Schenkeln der ersten Seitenteile lösbar verbunden. Die V-Strebe öffnet sich bevorzugt in Richtung Fahrzeugstossfänger und läuft zum Scherfeld hin zusammen. Die V-Strebe kann aus einem oder zwei Strebenteilen bestehen. Sowohl die V-, wie auch die Kreuzstrebe dienen der Erhöhung der Quersteifigkeit, was insbesondere bei hoher Querlast durch das kurvenäussere Rad, vorteilhaft ist.

Kreuzstreben oder V-Streben können ferner auch, in Richtung Fahrgastzelle betrachtet, nach dem Schubfeld angeordnet sein. Bei einer Kreuzstrebe sind die Arme an den beiden zweiten Seitenteilen sowie den beiden zweiten Schenkeln des ersten Seitenteils festgelegt. Die V-Strebe, als Alternative zur Kreuzstrebe, öffnet sich, ausgehend von einem Befestigungspunkt am Schubfeld, in Richtung Fahrgastzelle, wobei ihre beiden Arme an den zweiten Seitenteilen festgelegt sind.

Ferner kann der Hilfsrahmen eine weitere, zwischen den beiden zweiten Seitenteilen verlaufende Querverstrebung enthalten die beispielsweise über Halterelemente oder direkt an die zweiten Seitenteile angebunden ist und diese versteifend miteinander verbindet. Die Anbindung kann lösbar, z.B. mittels Schraubverbindung oder nicht-lösbar, z.B. über eine Schweissverbindung, erfolgen.

Kreuz-, V-Streben oder die Querverstrebung bestehen bevorzugt ebenfalls aus einem Metall, insbesondere aus einem Leichtmetall, wie Aluminium oder einer Aluminiumlegierung. Sie können jedoch auch aus Stahl oder einem Kunststoff, insbesondere faserverstärkten Kunststoff sein. Kreuz-, V-Streben oder die Querverstrebung können aus Ein- oder Mehrkammerhohlprofilen oder aus flachen bzw. profilierten Flächenelementen sein. Sie können aus einem Walz- oder Strangpressprodukt hergestellt sein.

Der erfindungsgemässe Hilfsrahmen ist in der Lage, bei einem Aufprallereignis, zusätzlich zu den bestehenden Deformationssystemen im Stossfängerbereich, Aufprallenergie eines Frontalzusammenstosses zu absorbieren. Dies geschieht indem nach Ausnützung der vorgelagerten Energieabsorbtionssysteme die mit den Querversteifungen als Starrkörper ausgebildeten ersten Seitenteile unter Stauchung, insbesondere unter harmonikaartiger Faltung, und/oder durch Biegung der zweiten Seitenteile im wesentlichen linear in Richtung Fahrgastzelle verschoben werden. Die zweiten Seitenteile werden bei diesem Vorgang insbesondere zwischen den hinteren und vorderen Karosseriebefestigungspunkten deformiert. Dabei sollen die Deformationszonen der zweiten Seitenteile möglichst keine Rissbildung zeigen.

Die ersten Seitenteile sind hierzu bevorzugt nicht als Deformationselemente ausgelegt, d.h. den ersten Seitenteile ist in diesem Fall kein definiertes Deformationsverhalten zugedacht.

In einer bevorzugten Ausführung einer Fahrzeugkarosserie werden bei diesem Vorgang die Karosserielängsträger zwischen den vorderen und hinteren Hilfsrahmenbefestigungspunkten unter Absorption von Aufprallenergie ebenfalls gestaucht. Es ist jedoch auch denkbar, dass die vorderen Karosseriebefestigungspunkte bei einem Aufprallereignis bei Überschreiten eines bestimmten Kraftniveaus gezielt versagen oder eine Relatiwerschiebung zwischen Hilfsrahmen und Karosserielängsträger zulassen, so dass die Deformation der zweiten Seitenteile unabhängig von der Deformation der darüberliegenden Karosseriestruktur erfolgt.

Der erfindungsgemässe Hilfsrahmen ist äusserst steif und trotzdem von vergleichsweise geringem Gewicht. Die Anordnung und Konstruktion der Seitenteile zeichnet sich durch ein hohes Absorptionsvermögen an Aufprallenergie aus und durch eine lange Dauerfestigkeit. Die aus ersten und zweiten Seitenteilen gefertigten Rahmenseiten zeichnen sich durch eine hohe Biege- und Torsionssteifigkeit aus. Ferner erlaubt vorliegende Konstruktion gegenüber herkömmlichen Lösungen eine Reduktion der Bauteile und des Gesamtgewichts.

Im folgenden wird die Erfindung beispielhaft und mit Bezug auf die beiliegenden Zeichnungen näher erläutert. Es zeigen:
- Fig. 1:: eine perspektivische Ansicht eines erfindungsgemässen Hilfsrahmens eines Fahrzeugvorderwagens;
- Fig. 2:: eine perspektivische Draufsicht des Verbindungsabschnittes zwischen Seitenteil und Querträger gemäss Fig. 1;
- Fig. 3-6:: Verschiedene Ausführungsvarianten eines erfindungsgemässen Hilfsrahmens eines Fahrzeugvorderwagens.

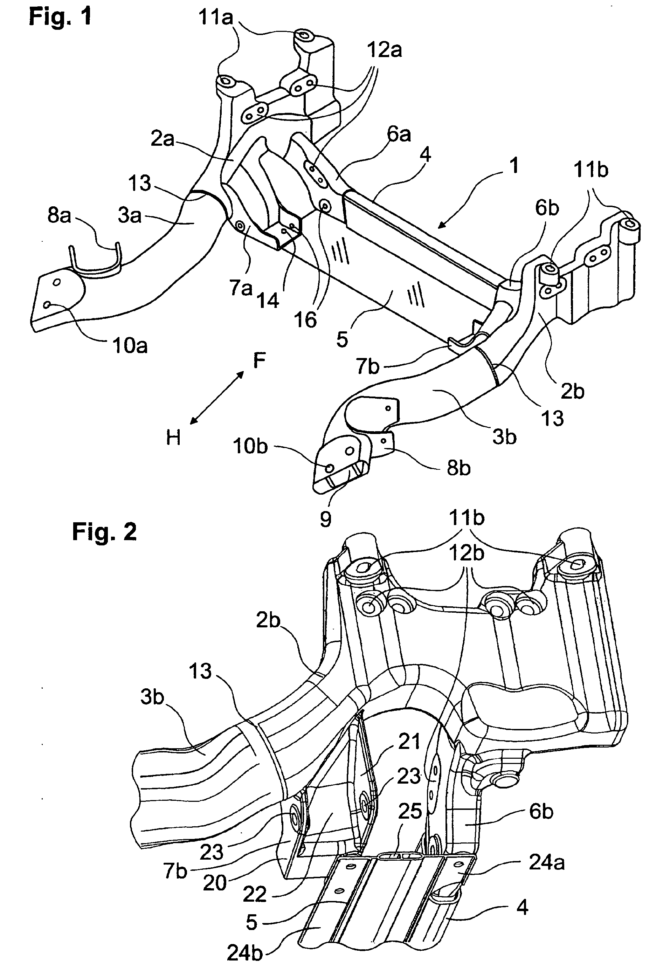

Der Hilfsrahmen 1 gemäss Fig. 1 enthält zwei Rahmenseiten mit jeweils einem zur Fahrzeugfront (F) hin angeordneten ersten Seitenteil 2a, 2b und einem zur Fahrgastzelle (H) hin angeordneten zweiten Seitenteil 3a, 3b, welches über eine Steckverbindung mit dem ersten Seitenteil 2a, 2b verbunden ist. Das erste Seitenteil 2a, 2b ist hierzu über einen Steckkörper (nicht gezeigt) in den Profilhohlraum des zweiten Seitenteils eingesteckt und entlang der Stossfläche 13 mit diesem verschweisst.

Das erste Seitenteil 2a, 2b ist ein Gussteil aus einer Aluminiumlegierung. Das zweite Seitenteil 3a, 3b ist ein Einfachhohlprofil aus einer Aluminiumlegierung, welches mittels Strangpressen und nachfolgender Innenhochdruckumformung zu einem Seitenteil hergestellt bzw. umgeformt wurde.

Das erste Seitenteil 2a, 2b enthält einen ersten 6a, 6b und zweiten Schenkel 7a, 7b, welche schräg zum Boden und zur gegenüber liegenden Rahmenseite gerichtet sind. Die beiden ersten Schenkel 6a, 6b der einander gegenüber liegenden ersten Seitenteile 2a, 2b sind über einen Querträger 4 miteinander verbunden. Die beiden zweiten Schenkel 7a, 7b sind über ein Schubfeld 5 miteinander verbunden. Das Schubfeld ist aus einem flächigen Strangpresshohlprofil aus einer Aluminiumlegierung und weist eine zentrale flache Hohlkammer und beidseits davon angeordnete Verbindungsflansche auf. Das Schubfeld 5 ist über eine Verschraubung 14 mit dem zweiten Schenkel 7a, 7b verbunden.

Die dem Schenkelzwischenraum zugewandten Schenkelwände des ersten 6a, 6b und zweiten Schenkels 7a, 7b weisen zwecks Befestigung der Lenkung an den Hilfsrahmen Anbindungspunkte in Form von einander gegenüber liegenden Ausnehmungen 16 auf, durch welche eine Schraubverbindung festlegbar ist.

Der Querträger ist ein Strangpresshohlprofil aus einer Aluminiumlegierung. Der erste Schenkel 7a, 7b ist hierzu über einen Steckkörper (nicht gezeigt) in den Profilhohlraum des Querträgers 4 eingesteckt und entlang der Stossfläche 13 mit diesem verschweisst.

Das Schubfeld 5 ist ferner über eine Schraubverbindung lösbar an einem Flansch 15 am Querträger 4 festgelegt.

Das erste Seitenteil 2a, 2b enthält Befestigungspunkte 11 a, 11 b zur Festlegung des Hilfsrahmens an die Karosseriestruktur, sowie Anbindungspunkte 12a zur Lagerung eines Antriebsaggregates (nicht gezeigt). Die Befestigungspunkte 11 a, 11 b werden durch Anformungen am erste Seitenteil 2a, 2b ausgebildet, welche Ausnehmungen für Schraubverbindungen enthalten sowie eine Auflagefläche zur Lagerung der Karosseriestruktur ausbilden.

Die Lagerung des Antriebsaggregates geschieht bsp. über ein an den Anbindungspunkten 12a des ersten Seitenteils 2a, 2b festgelegten Aggregatlagerelements (nicht gezeigt). Die Anbindungspunkte 12a sind an einer zur gegenüberliegenden Rahmenseite weisenden Wandfläche des ersten Seitenteils 2a, 2b sowie an einer zum zweiten Schenkel 7a, 7b weisenden Wandseite des ersten Schenkels 6a, 6b angeordnet.

Der zweite Schenkel 7a, 7b enthält zwei zur Fahrzeugaussenseite gerichtete, parallel und in Abstand zueinander verlaufende Schenkel-Wände 20, 21, welche zusammen mit einer Verbindungswand 22 einen U-förmigen, zur Fahrzeugaussenseite hin offenen Schenkelquerschnitt ausbilden (Fig. 2). Die Schenkel-Wände 20, 21 enthalten sich gegenüber liegende Ausnehmungen 23 zur Aufnahme einer Schraubverbindung, über welche ein Traglenker (nicht gezeigt) an den Hilfsrahmen angebunden wird.

Das Schubfeld 5 besteht aus einem flächigen Strangpressprofil mit einer zentralen Profilkammer 25, welche über einen Zwischensteg in zwei Teilkammern unterteilt ist, sowie beidseitig von der Profilkammer angeordneten Flanschen 24a, 24b, über welche das Schubfeld 5 an den ersten 6a und zweiten 7b Schenkel des ersten Seitenteils 2a befestigt ist. Die Anbindung des Schubfeldes 5 an den zweiten Schenkel 7a ist hier eine Doppelverschraubung. Das Schubfeld 5 enthält über dies Versteifungsrippen.

Der Endabschnitt des zweiten Seitenteils, welcher der Fahrgastzelle zugewandt ist, enthält Befestigungspunkte 10a, 10b zur Festlegung des Hilfsrahmens an einen Längsträger der Karosseriestruktur (nicht gezeigt). Die Anbindung an den Längsträger erfolgt mittels in Fahrzeughochrichtung geführten Schraubverbindungen, welche durch den Profilquerschnitt geführt sind. Zur Erhöhung der Steifigkeit und zur Vermeidung einer Profilquetschung beim Festlegen der Schrauben, sind im Verbindungsbereich sogenannte Distanzstücke 9 in den Profilquerschnitt eingeschoben, welche passgenau zwischen einer oberen und unteren Profilwand zu liegen kommen. Das Distanzstück ist hierzu in das Rohr verprägt.

Das zweite Seitenteil enthält ferner einen Anbindungspunkt für Radführungsglieder, insbesondere Streben (nicht gezeigt). Der Anbindungspunkt wird durch ein U-förmiges Anbindungselement 8a, 8b, welches in eine Ausnehmung im zweiten Seitenteil 3a, 3b eingelassen ist, ausgebildet. Das Anbindungselement ist entlang der Berührungslinien mit dem zweiten Seitenteil 3a, 3b verschweisst. Das Anbindungselement enthält zwei nach aussen gerichtete, parallele Wandabschnitte mit zwei sich gegenüberliegenden Ausnehmungen, durch welche eine Schraubverbindung zur Anbindung eines Radführungsgliedes geführt ist (nicht gezeigt). Die Wandabschnitte sind über eine am zweiten Seitenteil 3a, 3b aufliegende Verbindungswand miteinander zu einem U-förmigen Querschnitt verbunden.

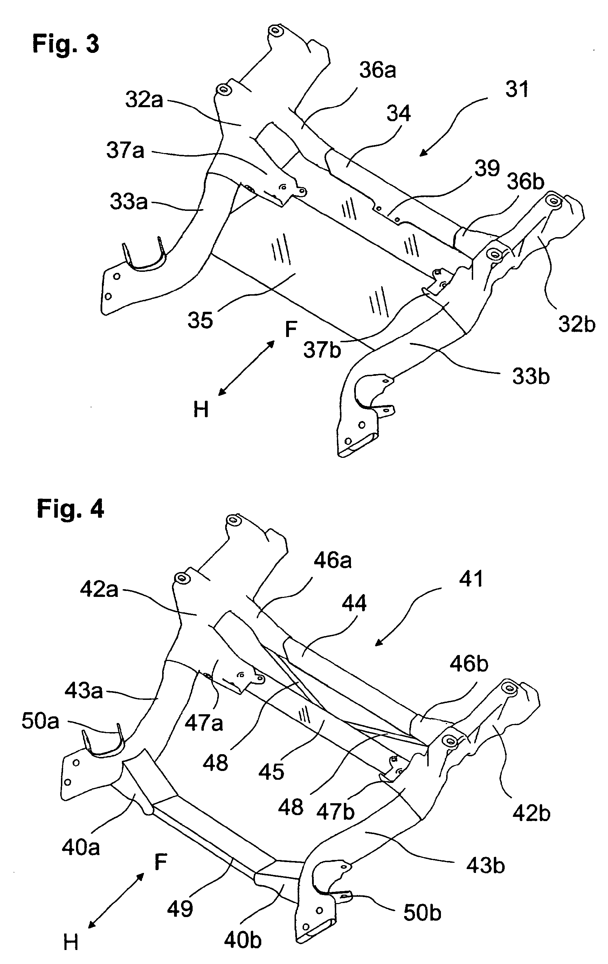

Die Figuren 3 bis 6 zeigen verschiedene Ausführungsvarianten von Querversteifungen in einem erfindungsgemässen Hilfsrahmen. Die Hilfsrahmen 31; 41; 51; 61 umfassen zwei Rahmenseiten mit jeweils einem ersten 32a, 32b; 42a, 42b; 52a, 52b; 62a, 62b und zweiten 33a, 33b; 43a, 43b; 53a, 53b; 63a, 63b Seitenteil. Das erste Seitenteil enthält einen ersten Schenkel 36a, 36b; 46a, 46b; 56a, 56b; 66a, 66b, an welchen ein Querträger 34; 44; 54; 64 festgelegt ist sowie einen zweiten Schenkel 37a, 37b; 47a, 47b; 57a, 57b; 67a, 67b, an welchen jeweils ein flächenförmiges Schubfeld 35; 45; 55; 65 mittels Schraubverbindungen festgelegt ist. Das Schubfeld 35; 55; 65 gemäss den Figuren 3, 5 und 6 ist mittels Schraubverbindung mittig an einen Flansch 39; 59; 69 am Querträger 34; 54; 64 festgelegt.

Die Seitenteile sowie der Querträger gemäss den Fig. 3 bis 6 entsprechen im wesentlichen der Konstruktion gemäss der Ausführungsform nach Figur 1 und 2.

Der Hilfsrahmen 31 gemäss Fig. 3 enthält ein tafelförmiges Schubfeld 35, welches an einem Flansch 39 des Querträgers 34, ferner am ersten 36a, 36b und zweiten 37a, 37b Schenkel sowie am zweiten Seitenteil 33a, 33b, bsp. auf rund halber Profillänge, mittels Schraubverbindungen festgelegt ist.

Das Schubfeld 45 gemäss Fig. 4 erstreckt sich zwischen den zweiten Schenkeln 47a und 47b und ist vom Querträger 44 beabstandet. Ausgehend von einem auf rund halber Länge liegenden Anbindungspunkt am Schubfeld ist eine sich in Fahrzeugfrontrichtung öffnende V-Strebe 48 am Schubfeld festgelegt. Die beiden Arme der V-Strebe sind an den ersten Schenkeln 36a, 36b festgelegt. Die V-Strebe ist bevorzugt lösbar, bsp. mittels Schraubverbindungen, an die Seitenteile und das Schubfeld festgelegt.

Ferner enthält der Hilfsrahmen eine weitere Querverstrebung 49, welche zwischen den beiden zweiten Seitenteilen verläuft und über Halterelemente 40a, 40b lösbar, bsp. mittels Schraubverbindung, an die zweiten Seitenteile angebunden ist und diese versteifend miteinander verbindet. Die Halterelemente 40a, 40b sind im Bereich der Anbindungselemente 50a, 50b (siehe auch Beschreibung zu Fig. 1) an das zweite Seitenteil 43a, 43b angebracht, bzw. entlang der Berührungslinie mit diesem verschweisst. Das Halterelement 40a, 40b kann zusammen mit dem Anbindungselement 50a, 50b einstückig ausgebildet sein.

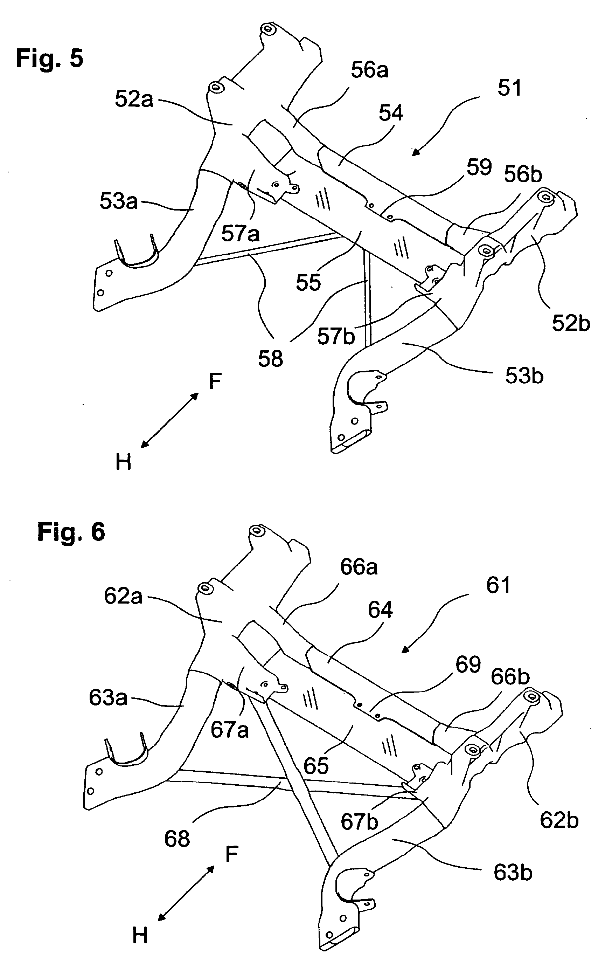

Die Ausführungsvariante gemäss Fig. 5 enthält ein zur Ausführungsvariante gemäss Fig. 1 und 6 analoges Schubfeld 55. Eine V-Strebe 58 sorgt für eine zusätzliche Querversteifung des Hilfsrahmens. Die sich zum Fahrzeugheck (H) hin öffnende V-Strebe 58 ist hierzu mit ihrem zulaufenden Ende im wesentlichen mittig an das Schubfeld 55 festgelegt sowie mit den Endabschnitten ihrer beiden Armen am zweiten Seitenteil 53a, 53b festgelegt. Die V-Strebe ist bevorzugt lösbar, bsp. mittels Schraubverbindungen, an die Seitenteile und das Schubfeld festgelegt.

Die Ausführungsvariante gemäss Fig. 6 enthält ein zur Ausführungsvariante gemäss Fig. 1 und 5 analoges Schubfeld 65. Eine Kreuzstrebe 68 sorgt für eine zusätzliche Querversteifung des Hilfsrahmens. Die Kreuzstrebe 68 ist hierzu mit den ersten Endabschnitten ihrer beiden Arme an die zweiten Schenkel 67a, 67b sowie mit den zweiten Endabschnitten am zweiten Seitenteil 63a, 63b festgelegt. Die Kreuzstrebe ist bevorzugt lösbar, bsp. mittels Schraubverbindungen, an die Seitenteile festgelegt.

Selbstverständlich eignen sich die Hilfsrahmen gemäss Fig. 1 bis 6 auch als Hinterachsträger, wobei in diesem Fall die Fahrzeugfrontrichtung der Fahrzeugheckrichtung entsprechen würde.

## Patentansprüche

1. Hilfsrahmen (1) eines Vorder- oder Hinterwagens eines Kraftfahrzeuges mit einer ersten und zweiten Rahmenseite, die in Fahrzeugquerrichtung voneinander beabstandet und über wenigstens einen im wesentlichen in Fahrzeugquerrichtung verlaufenden Querträger (4) miteinander verbunden sind, wobei die beiden Rahmenseiten jeweils zwei in Fahrzeuglängsrichtung (H-F) hintereinander angeordnete und direkt oder indirekt miteinander verbundene Seitenteile enthalten,
**dadurch gekennzeichnet, dass**
ein erstes zum Fahrzeugstossfänger hin angeordnetes Seitenteil (2a, 2b) ein Metallgussteil ist und ein zur Fahrgastzelle hin angeordnetes, zweites Seitenteil (3a, 3b) ein Hohlprofil ist, wobei die ersten Seitenteile (2a, 2b) der Rahmenseiten bezogen auf ein Crash-Ereignis als Starrkörper und die zweiten Seitenteile (3a, 3b) als in Fahrzeuglängsrichtung energieabsorbierende Deformationselemente ausgebildet sind.

2. Hilfsrahmen nach Anspruch 1, wobei die in Fahrzeugquerrichtung einander gegenüberliegenden Seitenteile (2a, 2b; 3a, 3b) der ersten und zweiten Rahmenseite jeweils spiegelsymmetrisch sind.

3. Hilfsrahmen nach einem der Ansprüche 1 bis 2, wobei das erste und zweite 2a, 2b; 3a, 3b) Seitenteil über eine verschweisste Steckverbindung miteinander verbunden sind.

4. Hilfsrahmen nach einem der Ansprüche 1 bis 3, wobei das zweite Seitenteil (3a, 3b) aus einem mittels eines IHU-, Biege und/oder Prägeverfahren umgeformten Ein- oder Mehrkammer-Strangpressprofil ist.

5. Hilfsrahmen nach Anspruch 4, wobei das zweite Seitenteil (3a, 3b) aus Aluminium oder einer Aluminiumlegierung ist.

6. Hilfsrahmen nach einem der Ansprüche 1 bis 4, wobei das zweite Seitenteil (3a, 3b) Befestigungspunkte (10a, 10b) zur Anbindung des Hilfsrahmen an eine Karosseriestruktur, insbesondere an einen Karosserielängsträger, enthält.

7. Hilfsrahmen nach Anspruch 6, wobei die Befestigungspunkte (10a, 10b) in einem zur Fahrgastzelle weisenden Endabschnitt des zweiten Seitenteils (3a, 3b) angeordnet sind.

8. Hilfsrahmen nach einem der Ansprüche 1 bis 7, wobei das zweite Seitenteil (3a, 3b) Anbindungspunkte (8a, 8b) für Radführungsglieder, insbesondere Führungslenker enthält.

9. Hilfsrahmen nach einem der Ansprüche 1 bis 8, wobei das erste Seitenteil (2a, 2b) ein Leichtmetallgussteil, insbesondere aus Aluminium, Magnesium oder einer Legierung davon, ist.

10. Hilfsrahmen nach einem der Ansprüche 1 bis 9, wobei das erste Seitenteil (2a, 2b) Befestigungspunkte (11a, 11b) zur Anbindung des Hilfsrahmens an eine Karosseriestruktur, insbesondere an einen Karosserielängsträger, enthält

11. Hilfsrahmen nach einem der Ansprüche 1 bis 10, wobei das erste Seitenteil (2a, 2b) Anbindungspunkte (23) zur Festlegung eines Fahrwerkslenkers enthält.

12. Hilfsrahmen nach einem der Ansprüche 1 bis 11, wobei das erste Seitenteil (2a, 2b) Anbindungspunkte (12a, 12b) zur Festlegung eines Antriebsaggregates enthält.

13. Hilfsrahmen nach einem der Ansprüche 1 bis 12, wobei der Querträger (4) die ersten Seitenteile (2a, 2b) der beiden Rahmenseiten miteinander verbindet.

14. Hilfsrahmen nach einem der Ansprüche 1 bis 13, wobei ein flächenförmiges Versteifungselement (5) die ersten Seitenteile (2a, 2b) der beiden Rahmenseiten miteinander verbindet und das Versteifungselement (5) direkt oder indirekt mit dem Querträger (4) und/oder den ersten Schenkeln (6a, 6b) verbunden ist.

15. Hilfsrahmen nach einem der Ansprüche 1 bis 14, wobei das erste Seitenteil (2a, 2b) einen zur gegenüberliegenden Rahmenseite gerichteten, ersten Schenkel (6a, 6b), zur Anbindung des Querträgers (4) enthält.

16. Hilfsrahmen nach einem der Ansprüche 1 bis 15, wobei das erste Seitenteil (2a, 2b) einen zur gegenüberliegenden Rahmenseite gerichteten, zweiten Schenkel (7a, 7b) zur Anbindung eines flächenförmigen Versteifungselements (5) enthält.

17. Hilfsrahmen nach einem der Ansprüche 1 bis 16, wobei die ersten Seitenteile (2a, 2b) zusammen mit der an den zweiten Schenkeln (7a, 7b) festgelegten, flächenförmigen Verstärkungsstruktur (5) und dem an den ersten Schenkeln (6a, 6b) festgelegten Querträger (4) eine steife Achsträgerstruktur ausbilden.

## Claims

1. Subframe (1) of a front or rear frame structure of a motor vehicle, with first and second frame sides spaced apart from each other in the transverse direction of the vehicle and interconnected by at least one crossmember (4) extending substantially in the transverse direction of the vehicle, wherein the two frame sides each contain two side members that are arranged one behind the other in the longitudinal direction (H-F) of the vehicle and are directly or indirectly interconnected,
**characterized in that**
a first side member (2a, 2b) located towards the vehicle bumper is a metal casting and a second side member (3a, 3b) located towards the passenger compartment is a hollow section, the first side members (2a, 2b) of the frame sides being designed to act as rigid bodies in the event of a collision, and the second side members (3a, 3b), as deformation elements absorbing energy in the longitudinal direction of the vehicle.

2. Subframe according to Claim 1 wherein the side members (2a, 2b; 3a, 3b) of the first and second frame sides opposite one another in the transverse direction of the vehicle are respectively mirror-symmetrical.

3. Subframe according to either of Claims 1 and 2 wherein the first and second side members (2a, 2b; 3a, 3b) are interconnected by a welded socket joint.

4. Subframe according to any one of Claims 1 to 3 wherein the second side member (3a, 3b) is a single- or multi-chamber extrusion shaped by a hydroforming, bending and/or stamping process.

5. Subframe according to Claim 4 wherein the second side member (3a, 3b) is made of aluminium or aluminium alloy.

6. Subframe according to any one of Claims 1 to 4 wherein the second side member (3a, 3b) has attachment points (10a, 10b) for connecting the subframe to a body structure and in particular to a longitudinal member thereof.

7. Subframe according to Claim 6 wherein the attachment points (10a, 10b) are located in an end portion of the second side member (3a, 3b) pointing towards the passenger compartment.

8. Subframe according to any one of Claims 1 to 7 wherein the second side member (3a, 3b) has link points (8a, 8b) for suspension members and in particular for control arms.

9. Subframe according to any one of Claims 1 to 8 wherein the first side member (2a, 2b) is a light metal casting consisting in particular of aluminium, magnesium or an alloy thereof.

10. Subframe according to any one of Claims 1 to 9 wherein the first side member (2a, 2b) has attachment points (11a, 11b) for connecting the subframe to a body structure and in particular to a longitudinal member thereof.

11. Subframe according to any one of Claims 1 to 10 wherein the first side member (2a, 2b) has link points (23) for securing a chassis arm.

12. Subframe according to any one of Claims 1 to 11 wherein the first side member (2a, 2b) has link points (12a, 12b) for securing a drive unit.

13. Subframe according to any one of Claims 1 to 12 wherein the crossmember (4) interconnects the first side members (2a, 2b) of the two frame sides.

14. Subframe according to any one of Claims 1 to 13 wherein a flat stiffening element (5) interconnects the first side members (2a, 2b) of the two frame sides and the stiffening element (5) is directly or indirectly connected to the crossmember (4) and/or to the first limbs (6a, 6b).

15. Subframe according to any one of Claims 1 to 14 wherein the first side member (2a, 2b) has a first limb (6a, 6b) orientated towards the opposite frame side, for connecting the crossmember (4).

16. Subframe according to any one of Claims 1 to 15 wherein the first side member (2a, 2b) has a second limb (7a, 7b) orientated towards the opposite frame side, for connecting a flat stiffening element (5).

17. Subframe according to any one of Claims 1 to 16 wherein the first side members (2a, 2b) together with the flat stiffening structure (5) secured to the two limbs (7a, 7b) and the crossmember (4) secured to the first limbs (6a, 6b) form a rigid compound cross-beam structure.

## Revendications

1. Châssis auxiliaire (1) d'un train avant ou arrière d'un véhicule automobile doté d'un premier côté et d'un deuxième côté de châssis, qui sont espacés l'un de l'autre dans le sens transversal du véhicule et sont reliés l'un à l'autre par le biais d'au moins une traverse (4) s'étendant essentiellement dans le sens transversal du véhicule, les deux côtés de châssis contenant respectivement deux parties latérales reliées l'une à l'autre directement ou indirectement et disposées l'une derrière l'autre dans le sens longitudinal du véhicule (H-F),
**caractérisé en ce que**
une première partie latérale (2a, 2b) disposée vers le pare-chocs du véhicule est une pièce coulée en métal et une deuxième partie latérale (3a, 3b) disposée vers l'habitacle est un profil creux, dans lequel les premières parties latérales (2a, 2b) des côtés de châssis sont réalisées sous forme de corps rigide par rapport à une collision et les deuxièmes parties latérales (3a, 3b) sont réalisées sous forme d'éléments de déformation absorbants l'énergie dans le sens longitudinal du véhicule.

2. Châssis auxiliaire selon la revendication 1, les parties latérales (2a, 2b ; 3a, 3b) opposées l'une à l'autre dans le sens transversal du véhicule du premier et deuxième côté de châssis étant respectivement énantiomorphes.

3. Châssis auxiliaire selon l'une quelconque des revendications 1 à 2, la première et deuxième (2a, 2b ; 3a, 3b) partie latérale étant reliées l'une à l'autre par le biais d'un raccord enfichable soudé.

4. Châssis auxiliaire selon l'une quelconque des revendications 1 à 3, la deuxième partie latérale (3a, 3b) étant en profilé extrudé à une ou plusieurs chambres façonné à l'aide d'un procédé de déformation à haute pression intérieure, d'un procédé de pliage et/ou d'un procédé d'estampage.

5. Châssis auxiliaire selon la revendication 4, la deuxième partie latérale (3a, 3b) étant en aluminium ou en alliage d'aluminium.

6. Châssis auxiliaire selon l'une quelconque des revendications 1 à 4, la deuxième partie latérale (3a, 3b) contenant des points de fixation (10a, 10b) permettant de relier le châssis auxiliaire à une structure de carrosserie, en particulier à un longeron de carrosserie.

7. Châssis auxiliaire selon la revendication 6, les points de fixation (10a, 10b) étant disposés dans une section d'extrémité orientée vers l'habitacle de la deuxième partie latérale (3a, 3b).

8. Châssis auxiliaire selon l'une quelconque des revendications 1 à 7, la deuxième partie latérale (3a, 3b) contenant des points de liaison (8a, 8b) pour les organes de guidage de roue, en particulier les bielles de guidage.

9. Châssis auxiliaire selon l'une quelconque des revendications 1 à 8, la première partie latérale (2a, 2b) étant une pièce coulée en métal léger, en particulier en aluminium, magnésium ou un alliage de ces deux éléments.

10. Châssis auxiliaire selon l'une quelconque des revendications 1 à 9, la première partie latérale (2a, 2b) contenant des points de fixation (11a, 11b) permettant de relier le châssis auxiliaire à une structure de carrosserie, en particulier à un longeron de carrosserie.

11. Châssis auxiliaire selon l'une quelconque des revendications 1 à 10, la première partie latérale (2a, 2b) contenant des points de liaison (23) permettant de fixer une bielle de châssis.

12. Châssis auxiliaire selon l'une quelconque des revendications 1 à 11, la première partie latérale (2a, 2b) contenant des points de liaison (12a, 12b) permettant de fixer un groupe d'entraînement.

13. Châssis auxiliaire selon l'une quelconque des revendications 1 à 12, la traverse (4) reliant l'une à l'autre les premières parties latérales (2a, 2b) des deux côtés de châssis.

14. Châssis auxiliaire selon l'une quelconque des revendications 1 à 13, un élément de renfort planiforme (5) reliant l'une à l'autre les premières parties latérales (2a, 2b) des deux côtés de châssis et l'élément de renfort (5) est relié directement ou indirectement à la traverse (4) et/ou aux premières branches (6a, 6b).

15. Châssis auxiliaire selon l'une quelconque des revendications 1 à 14, la première partie latérale (2a, 2b) contenant une première branche (6a, 6b) dirigée vers le côté de châssis opposé, permettant de relier la traverse (4).

16. Châssis auxiliaire selon l'une quelconque des revendications 1 à 15, la première partie latérale (2a, 2b) contenant une deuxième branche (7a, 7b) dirigée vers le côté de châssis opposé permettant de relier un élément du cadre de renforcement planiforme (5).

17. Châssis auxiliaire selon l'une quelconque des revendications 1 à 16, les premières parties latérales (2a, 2b) formant avec la structure de renfort planiforme (5) fixée sur les deuxièmes branches (7a, 7b) et avec la traverse (4) fixée aux premières branches (6a, 6b) une structure porte-essieu rigide.
